# EUROPÄISCHE PATENTSCHRIFT

(11) **EP 3 014 749 B1**
(45) Veröffentlichungstag und Bekanntmachung des Hinweises auf die Patenterteilung: **31.01.2018**
(21) Anmeldenummer: 14733207.6
(22) Anmeldetag: 27.06.2014
(51) Int. Cl.: H02K 29/03, H02K 1/16

(54) **ELEKTRISCHE MASCHINE**
ELECTRICAL MACHINE
MACHINE ÉLECTRIQUE

(30) Priorität: 27.06.2013 DE 102013212407
(43) Veröffentlichungstag der Anmeldung: 04.05.2016
(73) Patentinhaber: SEG Automotive Germany GmbH, 70499 Stuttgart (DE)
(72) Erfinder: TSCHEJA, Markus, 70806 Kornwestheim (DE)
(74) Vertreter: Steinbauer, Florian
(86) Internationale Anmeldenummer: PCT/EP2014/063709
(87) Internationale Veröffentlichungsnummer: WO 2014/207208

(56) Entgegenhaltungen:
- DE-A1- 10 243 985
- DE-A1-102011 006 918
- JP-A- 2010 041 852
- US-A1- 2001 005 104
- US-A1- 2002 047 478
- US-A1- 2013 154 434

## Beschreibung

Die Erfindung betrifft eine elektrische Maschine, insbesondere einen Wechselstromgenerator, nach dem Oberbegriff des Anspruchs 1.

### Stand der Technik

Es ist bekannt, dass beim Betrieb von elektrischen Maschinen Magnetgeräusche auftreten können, die beispielsweise durch vereinzelt im Stator vorhandene ferromagnetische Engpässe hervorgerufen werden. Im Statorblechpaket, welches das Joch des Stators einer elektrischen Maschine bildet, kann durch Stoßstellen, Nuten, Schweißpunkte oder andere Störstellen eine Beeinträchtigung der magnetischen Leitfähigkeit hervorgerufen werden, sodass man im Bereich einer derartigen Störstelle auch von einem ferromagnetischen Engpass sprechen kann. Diese Störstellen sind in der Regel fertigungstechnisch bedingt, weshalb eine Beseitigung dieser Störstellen nicht möglich ist.

Aus dem Stand der Technik ist es grundsätzlich bekannt, Maßnahmen bei elektrischen Maschinen zu ergreifen, um auftretenden Magnetgeräuschen beim Betrieb der elektrischen Maschine entgegenzuwirken. So ist aus der DE 36 08 472 C2 ein Verfahren zur Geräuschminderung bei einer elektrischen Maschine bekannt, welches die Verwendung von ferromagnetischen Keilen in den Statornuten oder eine entsprechende Spaltung von Statorzähnen vorsieht, um eine Verstimmung oder Verschiebung von Geräuschfrequenzen in nicht störende Bereiche zu ermöglichen. Die Spaltung von Zähnen oder der Einbau solcher ferromagnetischer Keile beeinträchtigt den Kupferfüllfaktor der Wicklungen und kann auch den magnetischen Fluss einschränken, was sich zwangsläufig auf die Leistung der elektrischen Maschine negativ auswirkt.

Aus der EP 0 699 357 B1 sind für Reluktanzmotoren unterschiedliche Ausfüllungen zwischen den Rotorpolen zur Vermeidung von Luftverwirbelungen und im Sinne einer magnetischen Leitung zur Abmilderung von Magnetostriktion beim Eintreten der Rotorpole in Bereiche des statorpolseitigen Flusses durch gleichmäßigere Verteilung der Kraftanregung auf die gesamte Rotoroberfläche bekannt. Diese Maßnahme stellt einen massiven Eingriff in das Prinzip der Reluktanzmaschine dar und wirkt sich negativ auf deren Leistungsfähigkeit aus.

Durch diese bekannten Maßnahmen lassen sich Magnetgeräusche, die durch vereinzelt eingebrachte ferromagnetische Engpässe entstehen, nicht gezielt beheben.

Aus der US 2002/047478 A1 sowie aus der US 2001/005104 A1 ist es bekannt, in periodischen Abständen ferromagnetische Engpässe in Form von schmaleren Statorzähnen auszubilden. Die DE 102 43 985 A1 offenbart die Verwendung von Schweißnähten zur Beeinflussung des ferromagnetischen Widerstands an einem Stator einer elektrischen Maschine. Schließlich ist aus der DE 10 2011 006918 A1 eine elektrische Maschine bekannt, deren Statorzähne mit unterschiedlichen Verbindungselementen versehen sind, um Rast- und/oder Pendelmomente zu reduzieren.

Aus der JP 2010 041852 A ist eine elektrische Maschine bekannt, die einen segmentierten Stator hat, wobei jedes Segment des Stators ein separates Blechpaket bildet. Durch die Segmentierung des Stators besitzt dieser eine Vielzahl von Stoßstellen, die fertigungsbedingte Engpässe für den magnetischen Fluss darstellen. Außerdem sind an den Blechpaketen Einkerbungen am Umfang vorgesehen, die vorzugsweise im mittleren Bereich an jedem Blechpaket angeordnet sind.

### Offenbarung der Erfindung

Die erfindungsgemäße elektrische Maschine mit den Merkmalen des Anspruchs 1 hat den Vorteil, dass Magnetgeräusche, die durch einen im Bereich des Rotors oder im Bereich des Stators vorhandenen magnetischen Engpass bzw. Störelement hervorgerufen werden, zumindest deutlich reduziert werden können. Eine durch einen magnetischen Engpass bzw. Störelement auftretende Beeinträchtigung des magnetischen Flusses ergibt im rotierenden Betrieb eine periodisch auftretende Magnetfeldschwankung bzw. eine stellenweise Änderung der Flussamplitude, die erfindungsgemäß durch wenigstens ein entgegenwirkendes Kompensationselement in ihrer Amplitudenänderung zumindest deutlich reduziert werden kann. Die Reduzierung der Magnetfeldschwankungen ergibt eine entsprechende Reduzierung der auftretenden Magnetgeräusche. Durch das Kompensationselement, bevorzugt ausgeführt als zweiter magnetischer Engpass, werden durch die erzielte Amplitudenänderung und damit durch die Reduzierung der Magnetfeldschwankungen, lokale Unterschiede zwischen den Magnetfeldflüssen von einem Pol des Rotors zu den einzelnen dem Pol gegenüberliegenden Zähnen des Stators kleiner, so dass dadurch die zwischen den einzelnen Zähnen des Stators und dem Pol wirkenden Kräfte untereinander vom Betrag her nicht mehr so unterschiedlich groß ausfallen wie ohne zweiten magnetischen Engpass.

Bei einem im Joch eines Statorblechpakets befindlichen Störelement in Form eines Luftspalts oder eines anderen, den magnetischen Widerstand erhöhenden Störelements, kann sehr vorteilhaft eine Kompensationsmaßnahme im unmittelbar an das Störelement angrenzenden Zahnbereich vorgenommen werden. Dadurch wird erreicht, dass auch bei einer Polposition, bei der ein Pol des Rotors winkelsymmetrisch zur Winkelposition der Störstelle ausgerichtet ist, durch die Kompensationsmaßnahme ein magnetischer Widerstand am Stator wirksam bleibt und eine Glättung der magnetischen Leitwertschwankungen im Statorblechpaket erreicht wird. Das Statorblechpaket ist vorzugsweise als rundgebogenes Flachpaket ausgeführt, vgl. auch die Offenbarung der WO 2001/054254 A1. D. h., dass streifenförmige, vorzugsweise gerade, Lamellen gleichartig angeordnet werden, so dass Nuten, welche zum Einlegen einer Wicklung vorgesehen sind, auf der gleichen Seite angeordnet werden. Ein solches im Wesentlichen quaderförmiges Flachpaket wird gebildet, in dem die einzelnen Lamellen untereinander verbunden werden und somit das eigentliche Paket gebildet wird. Vorzugsweise danach wird in die Nuten eine entsprechend zugerichtete Wicklung gelegt und somit ein Verbund aus Statorblechpaket und Wicklung gebildet. Es ist vorgesehen danach diesen Verbund rund zu biegen. Dabei entsteht planmäßig eine Stoßstelle, an der die beiden Enden des Statorblechpakets aneinander stoßen. Eine solche Stoßstelle ist ein Beispiel einer Störstelle bzw. eines Störelements. Diese Stoßstelle ist ein (erster) magnetischer Engpass, da die Fuge bzw. der Spalt zwischen den Enden des Statorblechpakets die magnetische Leitfähigkeit des Statorblechpakets an dieser Stelle verringert. Ein magnetischer Engpass ist in diesem Beispiel ein Jochbereich, der verglichen mit einem anderen beispielsweise benachbarten Jochbereich an einer Position eines anderen Zahns des Statorblechpakets oder an einer Position einer anderen Nut des Statorblechpakets das Magnetfeld schlechter leitet.

Es ist für einen (zweiten) magnetischen Engpass insbesondere vorgesehen, dass dessen Position über einen Umfang des rund gebogenen Statorblechpakets vorzugsweise weder punktsymmetrisch zu einem anderen magnetischen Engpass (Bezug Drehachse eines Rotors als Symmetriepunkt, d. h. Ansicht in Richtung der Drehachse, so dass diese als Punkt erscheint) noch spiegelsymmetrisch zu einem anderen magnetischen Engpass (Bezug Spiegelebene, in der die Drehachse eines Rotors liegt) angeordnet ist.

Die der Kompensation dienenden magnetischen Engpässe sollen nicht punktsymmetrisch zueinander liegen, da sonst im rotierenden Betrieb auf symmetrisch gegenüber liegenden Seiten des Stators dieselbe Kraftanregung zu verzeichnen ist, die von den in Umfangsrichtung folgenden fertigungsbedingten Engpässen noch verstärkt wird. Diese gleichzeitige abrupte Änderung des magnetischen Flusses auf beiden Seiten des Stators vor dem fertigungsbedingten Engpass, lässt sich folglich durch eine nicht punktsymmetrische Verteilung der Kompensationsengpässe verhindern. Damit folgt eine Aufteilung der Kraftanregung auf eine Vielzahl von Frequenzen, die zur Absenkung des Gesamtpegels der Schallleistung beim Magnetgeräusch führt. Es ist vorzugsweise auch vorgesehen, dass die (zweiten) kompensatorischen Engpässe nicht spiegelsymmetrisch zu einer Stoßstelle angeordnet sind. Sollte es aus technischen Gründen doch erforderlich beziehungsweise gewünscht sein, dass punktsymmetrisch zum zweiten kompensatorischen magnetischen Engpass ein anderer Engpass am Stator angebracht ist, so soll der andere Engpass ein kleinerer magnetischer Engpass als der kompensatorische zweite Engpass sein.

Vorzugsweise ist vorgesehen, dass der erste magnetische Engpass und vorzugsweise auch der zweite magnetische Engpass über eine ganze drehaxiale Breite eines Statorblechpakets verläuft. Des Weiteren ist vorzugsweise vorgesehen, dass ein erster magnetischer Engpass in einem Jochbereich größer ist als ein anderer magnetischer Engpass an einer anderen Umfangsposition des Jochbereichs.

Eine Kompensationsmaßnahme im Bereich des Statorblechs kann beispielsweise unterhalb eines Luftspalts im Zahnbereich so vorgesehen sein, dass dort in gleichen Winkelabständen in Rotationsrichtung des Rotors vor und hinter der Störstelle ein Kompensationselement in Form eines ferromagnetischen Engpasses angeordnet ist. Als Kompensationselement kann ein Schweißpunkt, eine Verkürzung der Statorzähne und/oder beispielsweise eine Verjüngung und/oder Verformung der Statorzähne vorgesehen sein. Beispielsweise kann auch eine Reduzierung des Eisenfüllfaktors im Bereich eines Zahns des Statorblechpakets als Kompensationsmaßnahme vorgesehen sein, was auf einfache Weise z. B. durch Auffächern der Lamellen eines axial verlaufenden Zahns erreicht werden kann.

Als sehr einfach realisierbare Kompensationsmaßnahme kann zur Erhöhung des magnetischen Widerstandes auch eine Schweißnaht, Niete oder Aussparung im Joch und/oder Zahnbereich (Konkavität am Zahn und/oder schmalerer Zahn)der Statorbleche vorgesehen sein. Die eingebrachte Kompensationsmaßnahme bzw. der zweite magnetische Engpass bedeutet, dass an dieser Stelle der Stator anders als an einer vergleichbaren technisch gleichen Stelle ist.

Zur Reduzierung von Magnetgeräuschen kann es auch vorteilhaft sein, das Störelement, welches die Magnetgeräusche auslöst, an einer anderen Position anzubringen, wobei diese Kompensationsmaßnahme auch in Kombination mit der Anbringung eines Kompensationselements zur magnetischen Widerstandserhöhung angewendet werden kann. Durch eine Verschiebung der Winkelposition eines Störelements kann im Hinblick auf weitere am Joch des Stators angeordnete Störelemente eine Unsymmetrie erzielt werden, die zu einer Geräuschminderung führen kann.

Zur Erzielung einer Reduzierung von Magnetgeräuschen kann als Kompensationsmaßnahme auch vorgesehen sein, dass im Jochbereich und/oder im Bereich des Rotors an bestimmten Kompensationsstellen ein vom Grundmaterial abweichendes Material verwendet ist.

Zur Reduzierung von Magnetgeräuschen kann auch in den Polen des Rotors an benachbarten Polpaaren ein Kompensationselement in Form einer Aussparung, Niete oder Materialänderung vorgesehen sein. Weiterhin kann auch in Polen benachbarter Polpaare vorgesehen sein, dass die Störstelle bezüglich ihrer Position verändert ist. Diese Positionsänderung kann im Magnetkörper oder an den Polen des Rotors vorgenommen werden.

Zur wenigstens teilweisen Kompensation des Einflusses einer vorhandenen Störstelle bezüglich entstehender Magnetgeräusche kann eine Störstelle, die beispielsweise fertigungsbedingt im Zahnbereich des Stators vorhanden ist, um eine 1/4-Polteilung bis 1/2-Polteilung versetzt positioniert werden. Dabei besteht auch die Möglichkeit, in entsprechender Weise eine Kompensationsmaßnahme in Form eines Kompensationselements in einer um eine halbe Polteilung versetzte Stelle an benachbarten Zähnen des Statorblechpakets zusätzlich zu einer vorhanden Störstelle anzubringen.

Die Anbringung von Kompensationselementen und das Vorsehen weiterer Kompensationsmaßnahmen, wie diese oben angegeben sind, erfordert keinen hohen technischen Aufwand, sodass mit verhältnismäßig einfachen Mitteln eine wirksame Reduzierung von Magnetgeräuschen beim Betrieb einer elektrischen Maschine erreicht werden kann. Diese erfindungsgemäßen Kompensationsmaßnahmen lassen sich bei elektrischen Maschinen, insbesondere auch bei Drehstrom- und Mehrphasengeneratoren durchführen. Die Erfindung ist auch bei Klauenpolgeneratoren anwendbar.

Eine Vielzahl von gegebenenfalls unvermeidbaren magnetischen Engpässen wirkt sich negativ auf den resultierenden magnetischen Fluss in der Maschine aus. Eine Kompensation eines jeden einzelnen Engpasses ist somit nicht zielführend, da die Leistung der elektrischen Maschine dadurch zusätzlich deutlich abnimmt. Daher darf die Anzahl der Engpässe, die der Kompensation dienen, die Anzahl der Polpaare nicht überschreiten.

Vorzugsweise können technische Beziehungen zwischen magnetischen Engpässen und Engpässen, die der Kompensation dienen, für einen Stator mit einem Joch und Nuten wie folgt angegeben werden:

Ist beispielsweise ein störender magnetischer erster Engpass im Joch radial außerhalb einer Nut (Fall A), d. h. an einer Umfangsposition einer Nut, so soll für einen eingebrachten zweiten magnetischen Engpass Folgendes alternativ jeweils beispielsweise gelten:
- Der zweite magnetische Engpass kann beispielsweise als Schweißstelle ausgeführt sein. Dabei liegt durch das Schweißen unlamelliertes Material vor, der Anteil an Verlust erzeugenden Wirbelströmen steigt, die magnetische Leitfähigkeit sinkt gegenüber dem lamellierten Material.
- Der zweite magnetische Engpass kann beispielsweise als Nut ausgeführt sein. Diese Nut kann beispielsweise am Außenumfang, im Nutgrund oder aber einer Zahnflanke angeordnet sein.
- Der zweite magnetische Engpass kann beispielsweise als sich drehaxial durch das lamellierte Paket erstreckender Niet ausgeführt sein.
- Der zweite magnetische Engpass kann beispielsweise als schmalerer und/oder kürzerer Zahn - z. B. ohne Zahnkopf - ausgeführt sein.

Ist beispielsweise ein störender magnetischer erster Engpass im Joch radial außerhalb eines Zahns (Fall B), d. h. an einer Umfangsposition eines Zahns, so soll für einen eingebrachten zweiten magnetischen Engpass gelten, dass dieser wie zu Fall A beschrieben ausgeführt sein kann.

Für den zweiten magnetischen Engpass im Stator (Fall A und Fall B) soll in Bezug auf die Lage zum ersten magnetischen Engpass gelten, dass dieser an einer Position angeordnet ist, die einschließlich zwischen einem ersten unmittelbar zum ersten magnetischen Engpass benachbarten Zahn im Stator bis einschließlich einer Position, die einer halben Polteilung Abstand zum ersten magnetischen Engpass entspricht. Dieser zweite magnetische Engpass kann beispielsweise ein Mal in eine erste Umfangsrichtung oder beispielsweise auch ein zweites Mal in eine andere Umfangsrichtung angeordnet sein. Es kann zwecks genauerer Einflussnahme auf den Kraftverlauf zwischen Stator und Rotorpol vorgesehen sein, dass in dem bzw. den o. g. vorgesehenen Bereichen für zweite magnetische Engpässe mehrere zweite magnetische Engpässe angeordnet sind.

Mit Bezug zu der Positionierung des zweiten magnetischen Engpasses relativ zum ersten magnetischen Engpass kann für den Fall A Folgendes angegeben werden:
- Hat beispielsweise der Stator 80 Nuten, 80 Zähne und der Rotor 16 Pole, so entspricht dies einem Verhältnis von 5 Nuten bzw. 5 Zähnen pro Pol. Die zweite Störstelle bzw. der zweite magnetische Engpass soll dann zwischen einschließlich der Position bzw. Umfangsposition, die dem zum ersten magnetischen Engpass nächstgelegenen Zahn entspricht bis zu einem Abstand zum ersten magnetischen Engpass von einer 1/2-Polteilung (dritter Zahn) zum ersten magnetischen Engpass positioniert werden.
- Hat beispielsweise der Stator 48 Nuten, 48 Zähne und der Rotor 16 Pole, so entspricht dies einem Verhältnis von 3 Nuten bzw. 3 Zähnen pro Pol. Die zweite Störstelle bzw. der zweite magnetische Engpass soll dann zwischen einschließlich der Position bzw. Umfangsposition, die dem zum ersten magnetischen Engpass nächstgelegenen Zahn entspricht bis zu einem Abstand zum ersten magnetischen Engpass von einer 1/2-Polteilung (zweiter Zahn) zum ersten magnetischen Engpass positioniert werden.

Mit Bezug zu der Positionierung des zweiten magnetischen Engpasses relativ zum ersten magnetischen Engpass kann für den Fall B Folgendes angegeben werden:
- Hat beispielsweise der Stator 80 Nuten, 80 Zähne und der Rotor 16 Pole, so entspricht dies einem Verhältnis von 5 Nuten bzw. 5 Zähnen pro Pol. Die zweite Störstelle bzw. der zweite magnetische Engpass soll dann zwischen einschließlich der Position bzw. Umfangsposition, die dem zum ersten magnetischen Engpass nächstgelegenen Zahn entspricht bis zu einem Abstand zum ersten magnetischen Engpass von einer 1/2-Polteilung (dritte Nut) zum ersten magnetischen Engpass positioniert werden.
- Hat beispielsweise der Stator 48 Nuten, 48 Zähne und der Rotor 16 Pole, so entspricht dies einem Verhältnis von 3 Nuten bzw. 3 Zähnen pro Pol. Die zweite Störstelle bzw. der zweite magnetische Engpass soll dann zwischen einschließlich der Position bzw. Umfangsposition, die dem zum ersten magnetischen Engpass nächstgelegenen Zahn entspricht bis zu einem Abstand zum ersten magnetischen Engpass von einer 1/2-Polteilung (zweite Nut) zum ersten magnetischen Engpass positioniert werden.

Allgemein gesprochen gilt für den Fall A und B, dass die zweite Störstelle bzw. der zweite magnetische Engpass dann zwischen einschließlich der Position bzw. Umfangsposition, die dem zum ersten magnetischen Engpass nächstgelegenen Zahn entspricht bis zu einem Abstand zum ersten magnetischen Engpass von einer 1/2-Polteilung zum ersten magnetischen Engpass positioniert werden soll.

Ausführungsbeispiele der Erfindung sind in den Zeichnungen dargestellt und in der nachfolgenden Beschreibung näher erläutert.

Es zeigen:
Figur 1a einen vereinfachten Querschnitt einer elektrischen Maschine, die einen zweipoligen Rotor und einen diesen ringförmig umschließenden Stator umfasst,
Figur 1b einen vergrößerten Ausschnitt von Figur 1a im Bereich einer im Joch des Stators befindlichen Störstelle,
Figur 2a einen Querschnitt gemäß Figur 1a, jedoch mit veränderter Polposition des Rotors,
Figur 2b einen vergrößerten Ausschnitt von Figur 2a im Bereich einer Störstelle bei symmetrisch zur Störstelle ausgerichtetem Rotor,
Figur 3a einen vereinfachten Querschnitt einer elektrischen Maschine mit einem Aufbau wie in Figur 1a dargestellt, jedoch mit einer Kompensationsmaßnahme im Bereich einer Störstelle,
Figur 3b einen vergrößerten Ausschnitt von Figur 3a im Bereich der Störstelle,
Figur 4 einen vereinfachten Querschnitt einer elektrischen Maschine mit einem Klauenpolrotor,
Figur 5 und Figur 6 vergrößerte Darstellungen jeweils eines teilweise dargestellten Querschnitts einer elektrischen Maschine mit einem Klauenpolrotor.
Figur 7 beispielhaft einen Ausschnitt einer Seitenansicht auf einen Stator mit fünf Nuten bzw. Zähnen pro Pol im Rotor, wobei der erste magnetische Engpass an der Position einer Nut angeordnet ist,
Figur 8 beispielhaft einen Ausschnitt einer Seitenansicht auf einen Stator mit fünf Nuten bzw. Zähnen pro Pol des Rotors, wobei der erste magnetische Engpass an der Position eines Zahns angeordnet ist,
Figur 9 zeigt verschiedene Kurven im Zusammenhang mit dem magnetischen Fluss ohne und mit einem zweiten magnetischen Engpass zur Kompensation.

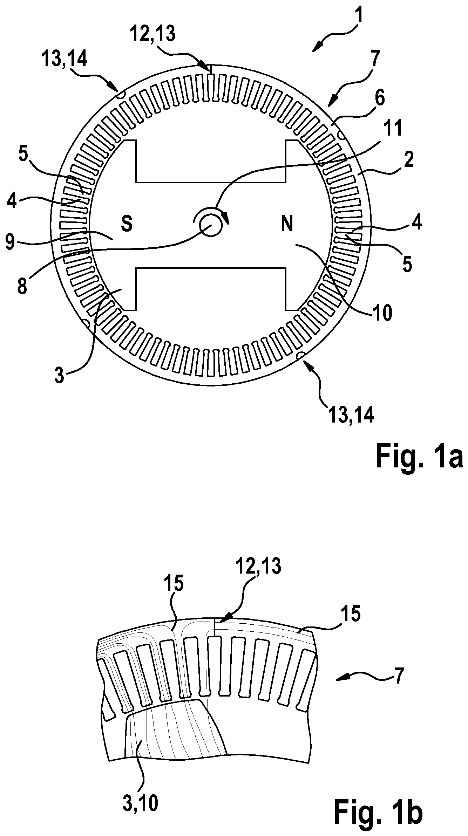

In Figur 1a ist ein vereinfacht dargestellter Querschnitt durch eine elektrische Maschine 1 ersichtlich, der ein Statorblech 2 und einen zweipoligen Rotor 3 zeigt. Jedes der axial hintereinander zu einem Statorblechpaket zusammengesetzten Statorbleche 2 besitzt radial nach innen gerichtete Zähne 4 und zwischen den Zähnen 4 ausgebildete Nuten 5. In den Nuten liegt bekanntlich die Ständerwicklung ein, die hier der Übersichtlichkeit wegen nicht dargestellt ist. Die Zähne 4 stehen an dem vom Statorblech gebildeten ringförmigen Joch 6 ab. Das Statorblechpaket bildet zusammen mit der Statorwicklung den Stator 7 der elektrischen Maschine, in welchem der Rotor 3 mittels einer Welle 8 drehbar gelagert ist. Der Rotor 3 besitzt hier zwei Pole 9, 10, die den Südpol S und den Nordpol N des Rotors 3 bilden.

Dient die elektrische Maschine 1 als Generator, wird der Rotor 3 über die Welle 8 beispielsweise in Pfeilrichtung 11 in Drehung versetzt. Dabei wird durch elektromagnetische Induktion ein magnetischer Fluss im Stator 7 erzeugt, der durch den Rotor 3 über den Nordpol N in die Statorbleche 2 im Zahnbereich radial eingespeist wird. Im Spezialfall eines Klauenpolgenerators fließt der magnetische Fluss im Zahnbereich, bedingt durch die Klauenfingergeometrie, trotz geblecht ausgeführten Stators zusätzlich auch axial. Der magnetische Fluss verteilt sich im Joch 6 tangential im Uhrzeigersinn und gegen den Uhrzeigersinn und verläuft somit vom Nordpol N zum Südpol S des Rotors 3.

Im dargestellten Statorblech 2 befindet sich im Joch 6 eine aus fertigungstechnischen Gründen erforderliche Stoßstelle 12, die eine Behinderung des magnetischen Flusses im Joch 6 darstellt, wenn sich der Rotor 3 beispielsweise in der in Figur 1a oder 1b dargestellten Position befindet. Die Stoßstelle 12 kann somit im Hinblick auf die magnetische Leitfähigkeit allgemein als Störstelle 13 (erster magnetischer Engpass) bezeichnet werden. Weitere Störstellen 13 (zweite magnetische Engpässe) sind als fertigungstechnisch bedingte Schweißnähte 14 verteilt am Umfang des Stators 7 vorhanden. Die Schweißnähte 14 verlaufen in axialer Richtung des Stators 7 an den Statorblechen 2, um diese zu einem Statorblechpaket zu verbinden.

In Figur 1b ist das Prinzip der Beeinträchtigung der magnetischen Leitfähigkeit im Bereich der Stoßstelle 12 dargestellt und zwar bei einer Polposition des Rotors 3, bei der dessen Nordpol N die Stoßstelle 12 noch nicht erreicht hat. Die im Uhrzeigersinn verlaufenden Feldlinien 15 sind durch die Stoßstelle 12 geschwächt, weshalb in Figur 1b die gegen den Uhrzeigersinn verlaufenden Feldlinien 15 dichter dargestellt sind. Die magnetische Leitfähigkeit des Jochs 6 ist durch die Stoß stelle 12 in der Weise reduziert, dass im Uhrzeigersinn ein entsprechend geringerer magnetischer Fluss als in der entgegengesetzten Richtung (gegen den Uhrzeigersinn) vorherrscht.

Der Rotor 3 ist in den vergrößerten Darstellungen von Figur 1b, 2b, 3b gegenüber den zugehörigen Figuren 1a, 2a, 3a vereinfacht dargestellt.

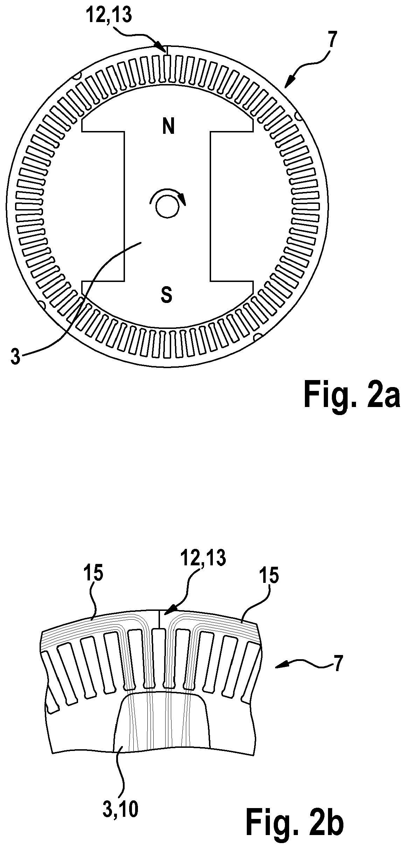

Die Querschnittsdarstellung von Figur 2a zeigt nun eine vertikale Ausrichtung des Rotors 3, sodass dessen Nordpol N symmetrisch zur Stoßstelle 12 ausgerichtet ist. In dieser Winkelposition des Rotors 3 verlaufen die Feldlinien 15, wie dies in Figur 2b dargestellt ist. Die Stoßstelle 12 hat in dieser Rotorposition keinen Einfluss auf die sich links und rechts der Stoßstelle 12 gleichmäßig verteilenden Feldlinien 15. Für den magnetischen Fluss stellt die Stoßstelle 12 keine Beeinträchtigung dar, da durch die Stoßstelle 12 keine Feldlinien 15 verlaufen. Während der Rotation des Rotors 3 ergibt sich somit ein maximaler magnetischer Fluss in der Rotorposition, bei der der zweipolige Rotor 3 gemäß Figur 2a und Figur 2b ausgerichtet ist. Verlässt der Rotor 3 dagegen die in den Figuren 2a, 2b dargestellte Position, so erhöht sich der von der Stoßstelle 12 ausgehende Einfluss auf den magnetischen Fluss, wie dies beispielsweise Figur 1b zeigt. Dadurch ergibt sich eine markante Reduzierung des magnetischen Flusses. Durch die sich daraus ergebenden Leitwertschwankungen treten im rotierenden Betrieb störende Magnetgeräusche auf.

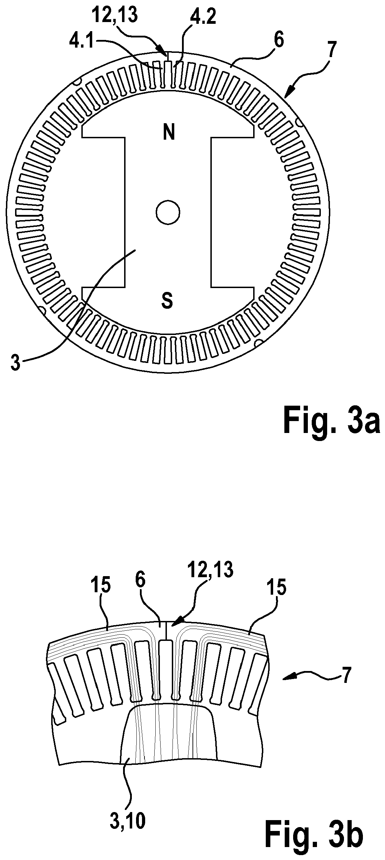

Damit sich der magnetische Fluss bei einer Rotorposition gemäß Figur 2a im Bereich der Störstelle 13 möglichst wenig verändert, ist gemäß Figur 3a vorgesehen, dass die unterhalb der als Stoßstelle 12 ausgebildeten Störstelle 13 die beidseitig der Stoßstelle 12 radial nach innen abstehenden Zähne 4.1 und 4.2 verjüngt ausgebildet sind. Die verjüngten Zähne 4.1, 4.2 stellen einen magnetischen Engpass für die vom Pol 10 des Rotors 3 zum Joch 6 verlaufenden Feldlinien 15 dar, wie dies anhand von Figur 3b veranschaulicht ist. Dadurch wird erreicht, dass auch in dieser Rotorposition durch die verengten Zähne 4.1, 4.2 eine Reduzierung der magnetischen Leitfähigkeit im Statorblech 2 vorhanden ist. Die verengten Zähne 4.1, 4.2 dienen somit als Kompensationselemente zur Reduzierung auftretenden Magnetgeräusche, da die Amplitudenschwankungen des magnetischen Flusses gegenüber einem unkompensierten Stator, wie er in Figur 1b gezeigt ist, im rotierenden Betrieb zumindest deutlich verringert werden.

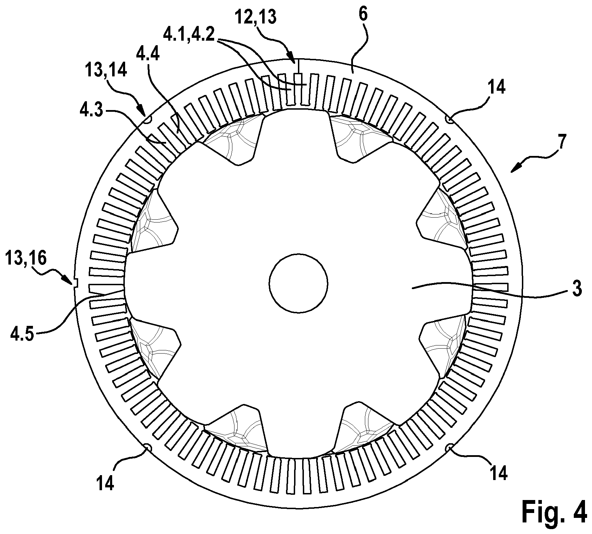

Die Schnittansicht von Figur 4 zeigt einen Klauenpolgenerator, dessen Rotor 3 als Klauenpolrotor ausgebildet ist. Bei diesem Ausführungsbeispiel sind im Bereich der Stoßstelle 12 die unmittelbar angrenzenden Zähne 4.1, 4.2 verkürzt ausgeführt (je ein zweiter magnetischer Engpass), um eine Kompensation der magnetischen Leitfähigkeitsveränderung im rotierenden Betrieb zu erreichen.

Figur 4 zeigt weitere Maßnahmen zur Kompensation der durch Störstellen 13 auftretenden Amplitudenschwankungen im magnetischen Fluss. Hierzu ist an einer Schweißnaht 14 beispielsweise eine Verjüngung der Zähne 4.3, 4.4 vorgesehen, während im Bereich einer als Nut 16 ausgebildeten Störstelle 13 eine Formänderung eines Zahns 4.5 vorgesehen ist. Im Bereich weiterer Schweißnähte 14 können verkürzte Zähne oder formveränderte Zähne als Kompensationselemente vorgesehen sein, um eine gewünschte Kompensation unerwünschter Magnetfeldschwankungen zu erreichen.

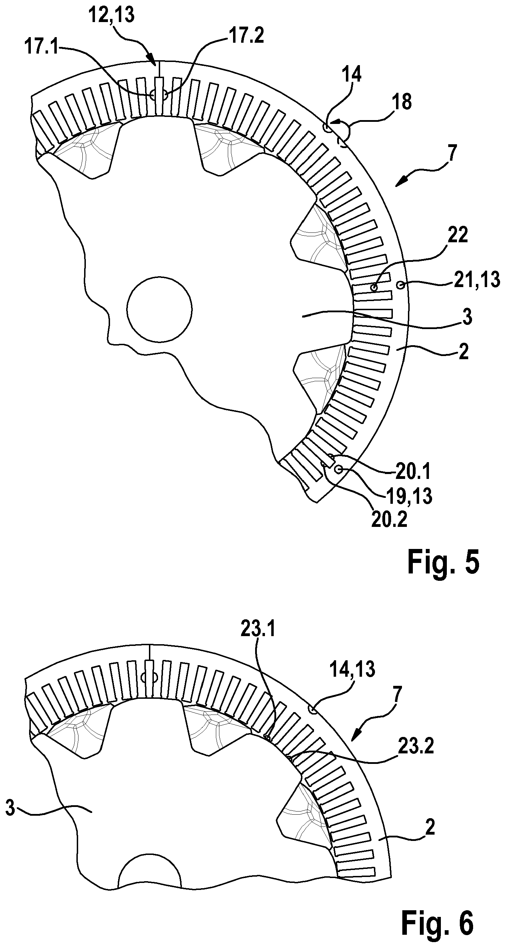

In den vergrößerten Darstellungen von Figur 5 und Figur 6 sind weitere beispielhafte Kompensationsmaßnahmen ersichtlich. Bei Figur 5 ist an den unterhalb der Stoßstelle 12 bzw. der Störstelle 13 befindlichen Zähnen jeweils eine Schweißnaht 17.1, 17.2 zur Ausbildung eines magnetischen Engpasses als Kompensationselement vorgesehen.

Eine außen am Statorblechpaket verlaufende Schweißnaht 14 ist aus ihrer ursprünglich vorgesehenen Position gemäß dem Pfeil 18 versetzt angeordnet, um eine Geräuschreduzierung zu erzielen.

Um an einer Störstelle, die den magnetische Fluss im rotierenden Betrieb der elektrischen Maschine periodisch störend beeinflusst und dadurch magnetische Geräusche hervorruft, eine Kompensationsmaßnahme vorzusehen, können den jeweiligen Störstellen Kompensationselemente (zweite magnetische Engpässe) zugeordnet werden, von denen in Figur 5 und Figur 6 einige beispielhaft dargestellt sind. Einer in Figur 5 als Niete 19 dargestellten Störstelle 13 können im angrenzenden Zahnbereich Schweißnähte 20.1 und 20.2 als Kompensationselemente zugeordnet sein. Einer Niete 21 als Störstelle 13 kann im unmittelbar angrenzenden Zahn des Statorblechs 2 ebenfalls eine Niete 22 als Kompensationselement zugeordnet sein.

In Figur 6 ist einer Schweißnaht 14, die eine Störstelle 13 im Joch 6 des Statorblechpakets darstellt, jeweils eine im Uhrzeigersinn und gegen den Uhrzeigersinn versetzt angeordnete Schweißnaht 23.1 und 23.2 als Kompensationsmaßnahme an den Zähnen des Statorblechs zugeordnet.

Sollten im Rotor 3 der elektrischen Maschine ebenfalls Störstellen vorhanden sein, die eine Schwankung des magnetischen Flusses im rotierenden Betrieb und dadurch magnetische Geräusche bewirken, können auch im Rotor 3 entsprechende Kompensationselemente Anwendung finden, wie diese im Bereich des Stators 7 erfindungsgemäß anbringbar sind.

An dem Statorblechpaket können Kompensationsmaßnahmen an einzelnen Statorblechen oder an mehreren oder auch an allen Statorblechen vorgesehen sein, um eine Kompensation der durch einzelne oder mehrere Störstellen auftretenden Amplitudenschwankungen im magnetischen Fluss zu erreichen.

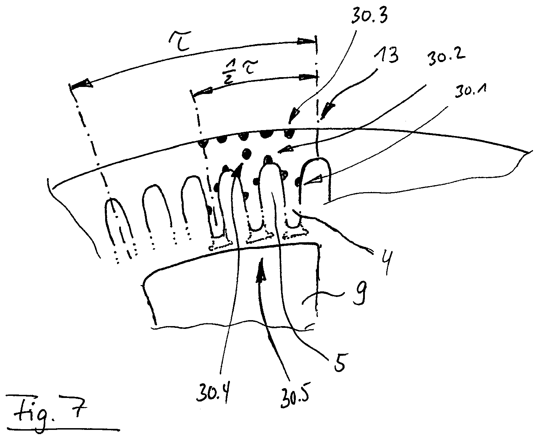

Figur 7 zeigt beispielhaft einen Ausschnitt einer Seitenansicht auf einen Stator 7 mit fünf Nuten 5 bzw. Zähnen 4 pro Pol des Rotors, wobei der erste magnetische Engpass 13 an der Position einer Nut 5 angeordnet ist. In diesem Beispiel hat der Stator 7 beispielsweise 80 Nuten 5 und 80 Zähne 4. Die Breite eines Pols 9 (Polteilung Tau) oder 10 eines Rotors 3 mit 16 Polen entspricht somit fünf Nuten 5 bzw. Zähnen 4. Es ist vorgesehen, dass der zweite magnetische Engpass 13 an einer der in Figur 7 prinzipiell dargestellten Positionen angeordnet ist. Der Abstand des zweiten magnetischen Engpasses zum ersten magnetischen Engpass ist in einem Bereich einschließlich eines zum ersten magnetischen Engpass nächstbenachbarten Zahns 4 bis einschließlich einer Position einer halben Polteilung (1/2 Tau) des Rotors 3 angeordnet. Die Position des zweiten magnetischen Engpasses 30 (Störstelle) kann beispielsweise an einer Flanke eines Zahns 4 (Engpass 30.1) und/oder an einem Nutgrund (Engpass 30.2) und/oder an eine radialen Außenseite des Stators 7 (Engpass 30.3 an einer der Nut 5 abgewandten Seite des Jochs 6 oder an einer einem Zahn 4 abgewandten Seite des Jochs 6) und/oder im Joch 6 angeordnet sein (Engpass 30.4). Zweite magnetische Engpässe 30.5 in der Gestalt von radial verkürzten Zähnen 4 sind ebenfalls dargestellt. Grundsätzlich ist vorgesehen, dass spiegelbildlich zum ersten magnetischen Engpass 13 - in diesem Fall auf der rechten Seite des ersten magnetischen Engpasses - die gleiche Vorschrift bezüglich des Abstandes des zweiten magnetischen Engpasses zum ersten magnetischen Engpass gilt. Im Falle, dass der erste magnetische Engpass an der Position einer Nut ist und an der um eine halbe Polteilung beabstandeten Position ein Zahn 4 ist, kann der zweite magnetische Engpass an einer von dem ersten magnetischen Engpass abgewandten Seite der halben Polteilung angeordnet ist. Wesentlich ist, dass der Zahn 4 an dieser Position geschwächt wird.

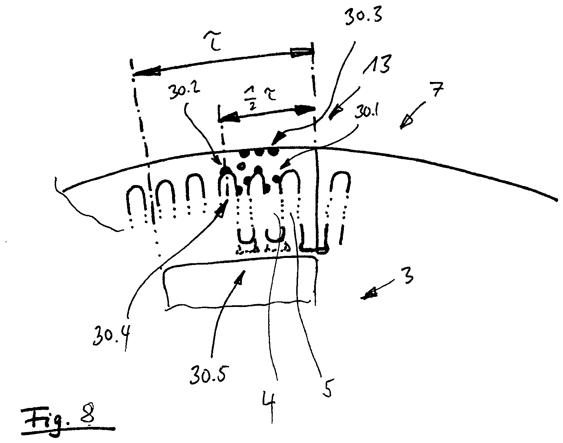

Figur 8 zeigt beispielhaft einen Ausschnitt einer Seitenansicht auf einen Stator 7 mit fünf Nuten 5 bzw. Zähnen 4 pro Pol 9, 10 im Rotor 3, wobei der erste magnetische Engpass 13 an der Position eines Zahns 4 angeordnet ist. In diesem Beispiel hat der Stator 7 beispielsweise 80 Nuten 5 und 80 Zähne 4. Die Breite eines Pols 9 (Polteilung Tau) oder 10 eines Rotors 3 mit 16 Polen entspricht somit fünf Nuten 5 bzw. Zähnen 4. Es ist vorgesehen, dass der zweite magnetische Engpass 13 an einer der in Figur 8 prinzipiell dargestellten Positionen angeordnet ist. Der Abstand des zweiten magnetischen Engpasses zum ersten magnetischen Engpass ist in einem Bereich einschließlich eines zum ersten magnetischen Engpass nächstbenachbarten Zahns 4 bis einschließlich einer Position einer halben Polteilung (1/2 Tau) des Rotors 3 angeordnet. Die Position des zweiten magnetischen Engpasses 30 (Störstelle) kann beispielsweise an einer Flanke eines Zahns 4 (Engpass 30.1) und/oder an einem Nutgrund (Engpass 30.2) und/oder an eine radialen Außenseite des Stators 7 (Engpass 30.3) und/oder im Joch 6 angeordnet sein (Engpass 30.4). Zweite magnetische Engpässe 30.5 in der Gestalt von radial verkürzten Zähnen 4 sind ebenfalls beispielhaft dargestellt. Grundsätzlich ist vorgesehen, dass spiegelbildlich zum ersten magnetischen Engpass 13 - in diesem Fall auf der rechten Seite des ersten magnetischen Engpasses - die gleiche Vorschrift bezüglich des Abstandes des zweiten magnetischen Engpasses zum ersten magnetischen Engpass gilt.

Die Darstellungen für zweite magnetische Engpässe in Figur 7 und 8 sind prinzipiell.

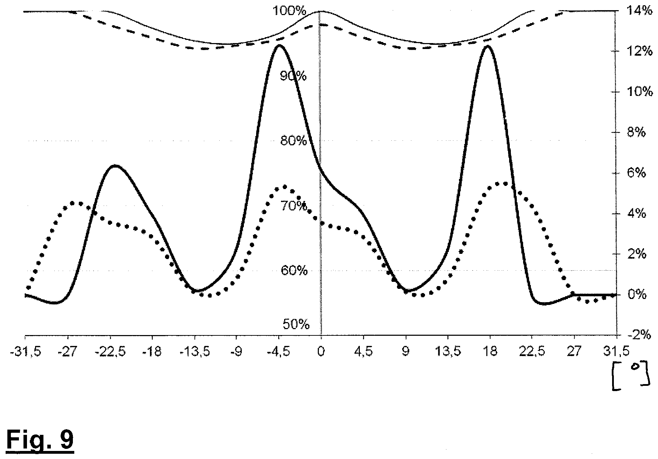

Figur 9 zeigt verschiedene Kurven im Zusammenhang mit dem magnetischen Fluss. Der Stator 7 hat bei der Position 0° eine Stoßstelle (ersten magnetischen Engpass) im Joch. Bei den Positionen +/- 2,25° ist je ein Zahn 4 angeordnet, bei den Positionen +/-4,5° ist wieder jeweils eine Nut 5 angeordnet. D. h. der Stator 7 hat im Abstand von 4,5° regelmäßig einen Zahn 4 und somit insgesamt 80 Zähne 4 und 80 Nuten 5.

Die dünne durchgezogene Linie beschreibt den Verlauf der Flussamplitude im magnetischen Pfad zwischen einem Nordpol eines Rotors über einen Statorabschnitt zu einem Südpol des Rotors (Primärachse in der Mitte). Durch die o. g. Stoßstelle wurde eine Einengung des magnetischen Flusses von 10% angenommen. Die dicke durchgezogene Linie beschreibt den Verlauf der Amplitude der resultierenden Änderung der Anregungskraft für das Magnetgeräusch an den Grenzflächen zwischen einem Pol des Rotors und den gegenüberliegenden Zähnen des Stators in % (Sekundärachse rechts).

Die dünne gestrichelte Linie beschreibt den Verlauf der Flussamplitude im magnetischen Pfad zwischen einem Nordpol eines Rotors über einen Statorabschnitt zu einem Südpol des Rotors (Primärachse in der Mitte) nach dem an der Position eines Zahns (+2,25°) ein zweiter magnetischer Engpass mit einer relativen Verschlechterung des magnetischen Flusses von 6% eingebracht wurde. Die dicke gepunktete Linie beschreibt den Verlauf der Amplitude der resultierenden Änderung der Anregungskraft für das Magnetgeräusch an den Grenzflächen zwischen einem Pol des Rotors und den gegenüberliegenden Zähnen des Stators in % (Sekundärachse rechts) mit diesem zweiten magnetischen Engpass. Man erkennt deutlich, dass die resultierende Änderung der Anregungskraft für das Magnetgeräusch an den Grenzflächen zwischen einem Pol des Rotors und den gegenüberliegenden Zähnen des Stators durch diese Maßnahme von über 12% auf unter 6% abnimmt und damit der Amplitudenverlauf "weicher" ist.

## Patentansprüche

1. Elektrische Maschine, insbesondere Wechselstromgenerator, mit einem wenigstens zwei Pole (9, 10) aufweisenden Rotor (3) und einem den Rotor (3) ringförmig umschließenden Stator (7) mit einem aus einem einzigen Statorblechpaket gebildeten Joch (6), bei der im rotierenden Betrieb der magnetische Fluss im Stator (7) durch einen fertigungsbedingten ersten magnetischen Engpass (13) beeinflusst ist, welcher an einer Umfangsposition des Stators (7) angeordnet ist und dieser erste magnetische Engpass als Stoßstelle (12) ausgeführt ist, und ein zweiter magnetischer Engpass (13) in einer Umfangsrichtung des Stators (7) zum ersten magnetischen Engpass (13) mit einem Abstand versetzt angeordnet ist, **dadurch gekennzeichnet, dass** der zweite magnetische Engpass (13) derartig mit Abstand zum ersten magnetischen Engpass (13) am Stator (7) angeordnet ist, dass zur Kompensation des Einflusses des ersten Engpasses bezüglich entstehender Magnetgeräusche der zweite magnetische Engpass (13) an einer um eine 1/4-Polteilung bis zu einer halben Polteilung des Rotors (3) versetzten Position gegenüber dem ersten magnetischen Engpass (13) angeordnet ist.

2. Elektrische Maschine nach Anspruch 1, **dadurch gekennzeichnet, dass** der zweite magnetische Engpass (13) als Kompensationsmaßnahme zur magnetischen Widerstandserhöhung angrenzend im Joch (6) des Statorblechpakets vorgesehen ist.

3. Elektrische Maschine nach Anspruch 2, **dadurch gekennzeichnet, dass** als Kompensationsmaßnahme im gleichen Winkelabstand in Umfangsrichtung des Stators vor und hinter dem ersten magnetischen Engpass (13) ein zweiter magnetischer Engpass (13) angeordnet ist.

4. Elektrische Maschine nach einem der vorhergehenden Ansprüche, **dadurch gekennzeichnet, dass** der zweite magnetische Engpass zur Kompensation von Magnetgeräuschen als eine Verkürzung und/oder Verjüngung und/oder Formänderung und/oder Verringerung des Eisenfüllfaktors gegenüber den sonstigen Zähnen (4) der Statorbleche (2) an wenigstens einem Zahn (4.1, 4.2) im unmittelbaren Bereich des ersten magnetischen Engpasses (13) an den Statorblechen (2) des Statorblechpakets vorgesehen ist.

5. Elektrische Maschine nach einem der vorhergehenden Ansprüche, **dadurch gekennzeichnet, dass** als zweiter magnetischer Engpass eine Schweißnaht (17.1, 17.2; 23.1, 23.2) und/oder eine Niete (22) und/oder eine Nut (16) im Joch (6) und/oder im Zahnbereich des Statorblechpakets angebracht ist.

6. Elektrische Maschine nach dem vorhergehenden Anspruch, **dadurch gekennzeichnet, dass** im Falle, dass der erste magnetische Engpass (13) an der Position einer Nut ist und an der um eine halbe Polteilung beabstandeten Position ein Zahn (4.1, 4.2) ist, der zweite magnetische Engpass in einem Abstand von einer halben Polteilung von dem ersten magnetischen Engpass in Umfangsrichtung angeordnet ist.

7. Elektrische Maschine nach einem der vorhergehenden Ansprüche, **dadurch gekennzeichnet, dass** eine Kompensation auftretender magnetischer Leitwertveränderungen im Jochbereich des Stators (7) dadurch erfolgt, dass im Jochbereich oder im Zahnbereich des Statorblechpakets eine Materialveränderung, durch Hitzebehandlung und/oder durch stellenweise mechanische Verformung des Materials, vorgesehen ist.

## Claims

1. An electric machine, more particularly an alternating current generator, having a rotor (3) comprising at least two poles (9, 10), and a stator (7) which surrounds the rotor (3) in an annular manner and has a yoke (6) formed from a single stator plate stack, wherein during rotating operation the magnetic flux in the stator (7) is influenced by a manufacturing-induced first magnetic constriction (13) which is arranged at a peripheral position of the stator (7) and this first magnetic constriction is formed as an abutment point (12), and a second magnetic constriction (13) is arranged offset and spaced apart with respect to the first magnetic constriction (13) in a peripheral direction of the stator (7), **characterised in that** the second magnetic constriction (13) is arranged spaced apart with respect to the first magnetic constriction (13) on the stator (7) such that, in order to compensate for the influence of the first constriction with respect to occurring magnetic noises, the second magnetic constriction (13) is arranged at a position which is offset by 1/4 of a pole pitch to half of a pole pitch of the rotor (3) with respect to the first magnetic constriction (13).

2. The electric machine as claimed in claim 1, **characterised in that** the second magnetic constriction (13) is provided adjacently in the yoke (6) of the stator plate stack as a measure for compensating for the increase in magnetic resistance.

3. The electric machine as claimed in claim 2, **characterised in that** a second magnetic constriction (13) is arranged as a compensation measure upstream and downstream of the first magnetic constriction (13) at the same angular spacing in the peripheral direction of the stator.

4. The electric machine as claimed in any one of the preceding claims, **characterised in that** the second magnetic constriction is provided on at least one tooth (4.1, 4.2) in the immediate vicinity of the first magnetic constriction (13) on the stator plates (2) of the stator plate stack in order to compensate for magnetic noises as a shortening and/or tapering and/or change in shape and/or reduction in the iron filling factor compared with the other teeth (4) of the stator plates (2).

5. The electric machine as claimed in any one of the preceding claims, **characterised in that** a weld seam (17.1, 17.2; 23.1, 23.2) and/or a rivet (22) and/or a groove (16) is incorporated in the yoke (6) and/or in the tooth region of the stator plate stack as the second magnetic constriction.

6. The electric machine as claimed in the preceding claim, **characterised in that** in the event that the first magnetic constriction (13) is at the position of a groove and is a tooth (4.1, 4.2) at the position spaced apart by half of a pole pitch, the second magnetic constriction is arranged spaced apart from the first magnetic constriction by half of a pole pitch in the peripheral direction.

7. The electric machine as claimed in any one of the preceding claims, **characterised in that** occurring magnetic conductance changes in the yoke region of the stator (7) are compensated for **in that** in the yoke region or in the tooth region of the stator plate stack a material change is provided by heat treatment and/or by mechanical deformation of the material in places.

## Revendications

1. Machine électrique, en particulier un alternateur, pourvue d'un rotor (3) comportant au moins deux pôles (9, 10) et d'un stator (7) entourant le rotor (3) de manière circulaire ayant une culasse (6) formée à partir d'un seul empilage de tôles de stator, dans laquelle, en fonctionnement rotatif, le flux magnétique dans le stator (7) est influencé par un premier passage magnétique étroit (13) résultant de la fabrication, qui est agencé dans une position initiale du stator (7) et ce premier passage magnétique étroit est réalisé sous la forme d'une jonction (12), et un second passage magnétique étroit (12) est agencé de manière décalée d'une certaine distance du premier passage magnétique étroit (13) dans une direction circonférentielle du stator (7), **caractérisée en ce que** le second passage magnétique étroit (13) est agencé sur le stator (7) à une certaine distance par rapport au premier passage magnétique étroit (13), de telle sorte que le second passage magnétique étroit (13) est agencé dans une position décalée de ¼ de pas polaire jusqu'à un demi pas polaire du rotor (3) par rapport au premier passage magnétique étroit (13), afin de compenser l'influence du premier passage étroit sur le bruit magnétique résultant.

2. Machine électrique selon la revendication 1, **caractérisée en ce que** le second passage magnétique étroit (13) est destiné à servir de mesure de compensation à la l'augmentation de la résistance magnétique adjacente dans la culasse (6) de l'empilage de tôles de stator.

3. Machine électrique selon la revendication 2, **caractérisée en ce qu'**un second passage magnétique étroit (13) faisant office de mesure de compensation est agencé devant et derrière le premier passage magnétique étroit (13) à distance angulaire constante dans une direction circonférentielle du stator.

4. Machine électrique selon l'une des revendications précédentes, **caractérisée en ce que** le second passage magnétique étroit destiné à compenser les bruits magnétiques est prévu sur au moins une dent (4.1, 4.2) située au voisinage immédiat du premier passage magnétique étroit (13) sur les tôles de stator (2) de l'empilage de tôles de stator, sous la forme d'un raccourcissement et/ou d'un rétrécissement et/ou d'un changement de forme et/ou d'une diminution du facteur de remplissage du fer par rapport aux autres dents (4) des tôles de stator (2).

5. Machine électrique selon l'une des revendications précédentes, **caractérisée en ce qu'**une soudure (17.1, 17.2 ; 23.1, 23.2) et/ou un rivet (22) et/ou une rainure (16) faisant office de second passage magnétique étroit est réalisé dans la culasse (6) et/ou dans la zone des dents de l'empilage de tôles de stator.

6. Machine électrique selon la revendication précédente, **caractérisée en ce que** dans le cas où le premier passage magnétique étroit (13) se situe dans la position d'une rainure et qu'une dent (4.1, 4.2) se situe dans la position espacée d'un demi pas polaire, le second passage magnétique étroit est agencé à une distance d'un demi pas polaire par rapport au premier passage magnétique étroit dans la direction circonférentielle.

7. Machine électrique selon l'une des revendications précédentes, **caractérisée en ce qu'**une compensation de variations résultantes de la conductance magnétique dans la zone de culasse du stator (7) est réalisée de telle sorte qu'une modification de matière est prévue dans la zone de culasse ou dans la zone des dents de l'empilage de tôles de stator, par un traitement thermique et/ou par une déformation mécanique localisée de la matière.
